# EUROPEAN PATENT SPECIFICATION

(11) **EP 3 476 646 B1**
(45) Date of publication and mention of the grant of the patent: **27.07.2022**
(21) Application number: 17819880.0
(22) Date of filing: 15.06.2017
(51) Int. Cl.: B60L 15/42, B61L 23/16, B61L 3/00, B61L 15/00, B61L 21/00, B61L 23/34, B61L 25/02

(54) **ON-BOARD DEVICE, TRAIN, AND SIGNALING SAFETY SYSTEM**
BORDEIGENE VORRICHTUNG, ZUG UND SIGNALISIERUNGSSICHERHEITSSYSTEM
DISPOSITIF EMBARQUÉ, TRAIN ET SYSTÈME DE SÉCURITÉ DE SIGNALISATION

(30) Priority: 28.06.2016 JP 2016128053
(43) Date of publication of application: 01.05.2019
(73) Proprietor: Hitachi, Ltd., Tokyo 100-8280 (JP)
(72) Inventor: KATSUTA, Keiichi, Tokyo 100-8280 (JP); TANI, Hiroyuki, Tokyo 100-8280 (JP); MAEKAWA, Keiji, Tokyo 100-8280 (JP); NAKANISHI, Yusuke, Tokyo 100-8280 (JP)
(74) Representative: Mewburn Ellis LLP
(86) International application number: PCT/JP2017/022120
(87) International publication number: WO 2018/003520

(56) References cited:
- EP-A2- 0 341 826
- WO-A1-2016/088434
- JP-A- 2014 107 974
- JP-A- 2016 002 773
- JP-A- 2016 002 773
- JP-A- 2016 059 223
- JP-A- 2016 059 223

## Description

### Technical Field

The present invention relates to an on-board device for running of a vehicle such as a railway vehicle, a monorail, an LRT (Light Rail Transit) vehicle, an AGT (Automated Guided Train), and cars, and relates to a train, and a signaling safety system.

### Background Art

Conventionally, a signaling safety system has secured the safety of running of a train by a signaling block system for delimiting a track into a series of constant sections, permitting only one train to occupy one section while not permitting other trains to enter the section until the one train finishes completely passing through the section.

As one of problems to be solved, Patent Document 1 indicates that, in relation to a signaling safety system, "in the track circuit, a rail is subjected to electrical insulation, and a power source is connected to one end, while a relay is connected to the other end opposite to the one end, whereby a short circuit between rails caused by a train is detected. The problem with this arrangement is found in the high maintenance cost." (refer to Patent Document 1), and as one of means for solving problems, Patent Document 1 discloses that "the present invention provides a signaling safety system in which the safety of a train running within a predetermined section is ensured by a telegram, and the telegram is circulated among trains or wayside equipment located within the predetermined section and has block occupancy information that enables setting of the right of occupancy by a train to each of a plurality of blocks into which the section is divided" (refer to Patent Document 1).

### Prior Art Document

### Patent Document

Patent Document 1: JP-2006-232106-A
Patent Document 2: JP-2016-059223-A proposes an on-board device, a train, and a signaling system.
Patent Document 3: JP-2016-002773-A proposes a vehicle control device and a vehicle control method.

### Summary of the Invention

The invention is defined by the appended independent claims. Dependent claims constitute embodiments of the invention.

### Problem to be Solved by the Invention

The signaling safety system of Patent Document 1 is intended to virtually set blocked sections to control each train. However, at a time of coupling one train to the other train, a plurality of trains are permitted to enter one blocked section; thus, for securing the safety, it is necessary for a driver or an operator to conduct work for confirming that one of the trains is surely stopped. Furthermore, according to the system that controls intervals between a plurality of trains on the basis of a train position detected by an on-board device of each train, for securing the safety, it is necessary to conduct work for confirming that the trains have been surely coupled.

In the light of the aforementioned problems, an object of the present invention is to provide an on-board device, a train, and a signaling safety system that can enhance safety at a time of coupling trains.

### Means for Solving the Problem

To solve the problems, one of typical on-board devices of the present invention is described in claim 1.

### Effect of the Invention

According to the present invention, an on-board device, a train, or a signaling safety system can enhance safety at a time of coupling trains.

### Brief Description of the Drawings

FIG. 1 is a diagram illustrating an example of a signaling safety system according to an embodiment.
FIG. 2 is a diagram illustrating areas and blocks according to the embodiment.
FIG. 3 is a diagram illustrating an example of a safety telegram according to the embodiment.
FIG. 4 is a diagram illustrating a position of each train and a content of the safety telegram in Step 1 according to the embodiment.
FIG. 5 is a diagram illustrating a position of each train and a content of the safety telegram in Step 2 according to the embodiment.
FIG. 6 is a diagram illustrating a position of each train and a content of the safety telegram in Step 3 according to the embodiment.
FIG. 7 is a diagram illustrating a position of each train and a content of the safety telegram in Step 4 according to the embodiment.
FIG. 8 is a diagram illustrating a position of each train and a content of the safety telegram in Step 6 according to the embodiment.
FIG. 9 is a diagram illustrating a position of each train and a content of the safety telegram in Step 7 according to the embodiment.
FIG. 10 is a diagram illustrating a position of each train and a content of the safety telegram in Step 8 according to the embodiment.
FIG. 11 is a diagram illustrating a position of each train and a content of the safety telegram in Step 9 according to the embodiment.

### Modes for Carrying Out the Invention

A signaling safety system that utilizes circulation of a safety telegram has a mechanism such that an on-board device mounted in each train updates information about the circulated safety telegram, thereby securing a right of occupancy of a range of a route on which the train is intended to run and enabling the train to run by changing over a switch included in the range. Therefore, even if one train is to approach the other train for coupling, the one train is unable to enter a range the right of occupancy of which is owned by the other train.

Thus, to couple trains, it is necessary for a driver or an operator to confirm that one of the trains is stopped and then to permit the other train to enter a range the right of occupancy of which is owned by the one train.

The embodiment discloses a signaling safety system configured such that an on-board device of one of trains fills in information about giving permission to the other train to enter a range occupied by the one train in a telegram circulated between on-board devices of the trains on condition that the one train is stopped, and that the other train can thereby approach the one train safely without driver's or operator's confirming that the one train is stopped.

The embodiment of the present invention will be described hereinafter in detail with reference to the drawings.

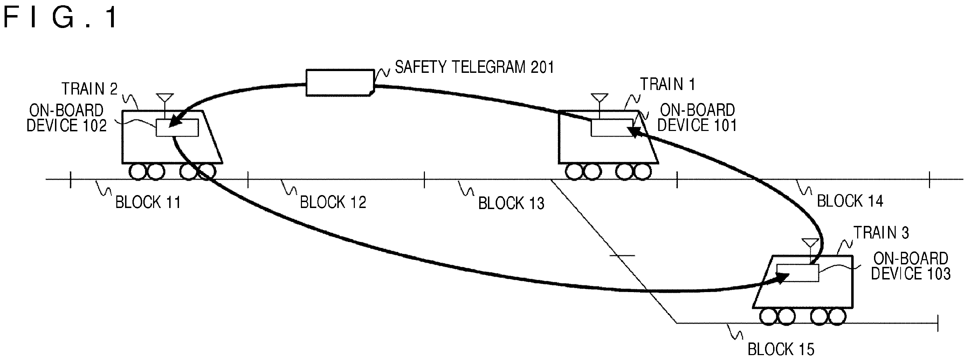

FIG. 1 is a diagram illustrating an example of the signaling safety system according to the embodiment. As depicted in FIG. 1, the signaling safety system according to the embodiment is configured with an on-board device 101 mounted in a train 1, an on-board device 102 mounted in a train 2, and a safety telegram 201 that is a telegram circulated among the on-board devices.

On-board devices 101, 102, and 103 have functions necessary to control the trains mounting the on-board devices 101, 102, and 103, respectively. For example, each of the on-board devices 101, 102, and 103 has functions including a function to transmit and receive the safety telegram 201, a function to control each of trains 1, 2, and 3 on the basis of the safety telegram 201, a function to update the safety telegram 201, a function to detect a current position of the corresponding train (particularly a current block position), and a function to detect a current speed of the corresponding train (including whether or not the train is stopped).

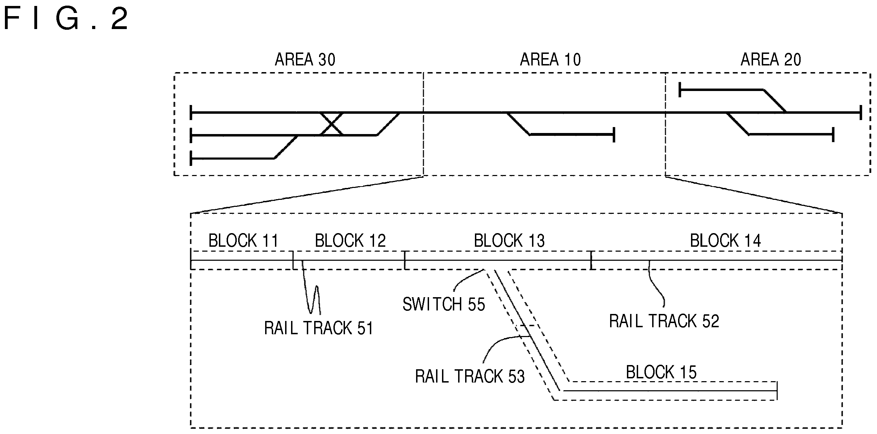

FIG. 2 is a diagram illustrating blocks in a relationship with areas according to the embodiment. An entire line on which the trains run is divided into a plurality of preset control areas and one control area is further divided into a plurality of blocks. In the embodiment, as depicted in FIG. 2, the entire line is divided into three areas of areas 10, 20, and 30, and the area 10 is divided into five blocks of blocks 11, 12, 13, 14, and 15.

In the area 10, a rail track 51 on which the trains run from the left is branched off into rail tracks 52 and 53 by a switch 55. It is noted herein that from the left, the blocks 11 and 12 indicate a range of the rail track 51, the block 13 indicates a range in which the switch 55 is present, the block 14 indicates a range of the rail track 52, and the block 15 indicates a range of the rail track 53.

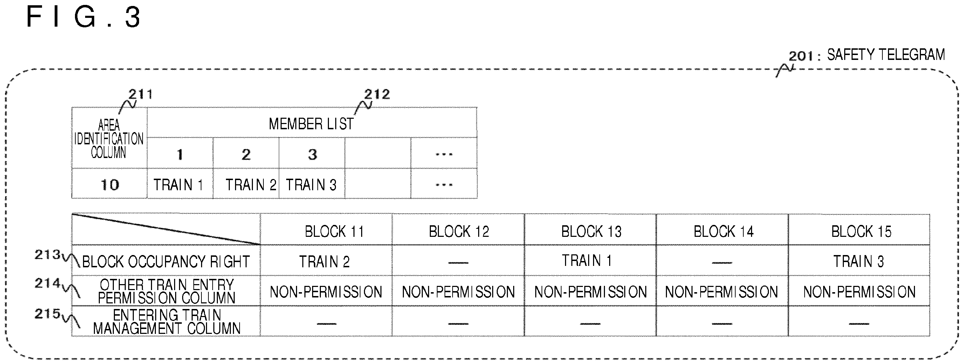

In the embodiment, control over the area 10 will be described. In the embodiment, as depicted in FIG. 1, the one safety telegram 201 manages information about the on-board devices of all the trains running in the area 10 and occupancy range information about each train, and this safety telegram 201 is circulated among the on-board devices of all the trains running in the area. While the safety telegram may manage the information in any form as long as the form ensures that the information can be controlled, a specific example of the safety telegram will be described with reference to FIG. 3.

FIG. 3 is a diagram illustrating an example of the safety telegram according to the embodiment. In the embodiment, as depicted in FIG. 3, the safety telegram 201 will be described by organizing the safety telegram 201 using an area identification column 211, a member list column 212, a block occupancy right column 213, another train entry permission column 214, an entering train management column 215.

In the area identification column 211, identification information about each area managed by the safety telegram 201 is filled in (stored). Since the control over the area 10 is described in the embodiment, "10" is filled in the area identification column 211.

In the member list column 212, identification information about the on-board device of each train running in the area is filled in. Each device circulates the safety telegram 201 in accordance with this member list. In other words, the device that has received the safety telegram transmits the safety telegram to the on-board device having a next train number on this member list, and the last device on the member list transmits the safety telegram to the first device. Since the train 1, the train 2, and the train 3 are filled in herein in 1, 2, and 3 on the member list, the safety telegram 201 is circulated among the trains in an order of trains 1, 2, 3, 1, 2 ... in accordance with an order of 1, 2, 3, 1, 2, ... on the member list.

In the block occupancy right column 213, identification information about the train having the right of occupancy associated with each block in the area is filled in. In the embodiment, occupied range information about each train will be described in a case of managing the occupied range information about each train using this block occupancy right column 213. In other words, it is required for a train to secure the right of block occupancy without fail to enter each block, and only one train can secure the right of occupancy of one block. Each on-board device has a mechanism such that when receiving the safety telegram 201, the on-board device checks the block occupancy right column 213 of the block which the train mounting the on-board device is to enter, and that the train can secure the right of block occupancy by filling in identification information about the train only in a case in which identification information about the other train is not filled in. In other words, a block associated with which the identification information about the train is filled in becomes an occupied range of the train.

In the other train entry permission column 214, information about whether the on-board device of the train that has secured the right of occupancy of the block permits the other train to enter the block is filled in. Here, a range of the block the right of occupancy of which the train has secured becomes the occupied range of the train. In a case of giving permission of entry per block, "permission" is filled in as other train entry permission information and a train is permitted to enter each block. In a case of "non-permission," a train is not permitted to enter the block.

Furthermore, in the embodiments, in a case of assuming that a train stopped and waiting for coupling is a first train and a train approaching the first train for coupling is a second train, the on-board device of the first train giving permission to the second train on condition that the first train is stopped.

In the entering train management column 215, identification numbers of all trains (other than the train that owns the right of occupancy) capable of entering the block which the other trains are permitted to enter in the other train entry permission column 214 are filled in. In the embodiment, the on-board device of the second train fills in the identification number of the second train.

It is noted that all the identification numbers of the trains are filled in this entering train management column 215 by as much as the number of trains permitted to simultaneously enter the block which the other trains are permitted to enter. Only the trains the identification numbers of which have been filled in at this time are permitted to enter this block. It is assumed herein that the number of trains permitted to simultaneously enter a block as other trains can be specified in advance. While the number of permitted trains is assumed as one in the embodiment, the number of permitted trains may be two in a case of operation for simultaneously coupling trains to the front and rear of one train.

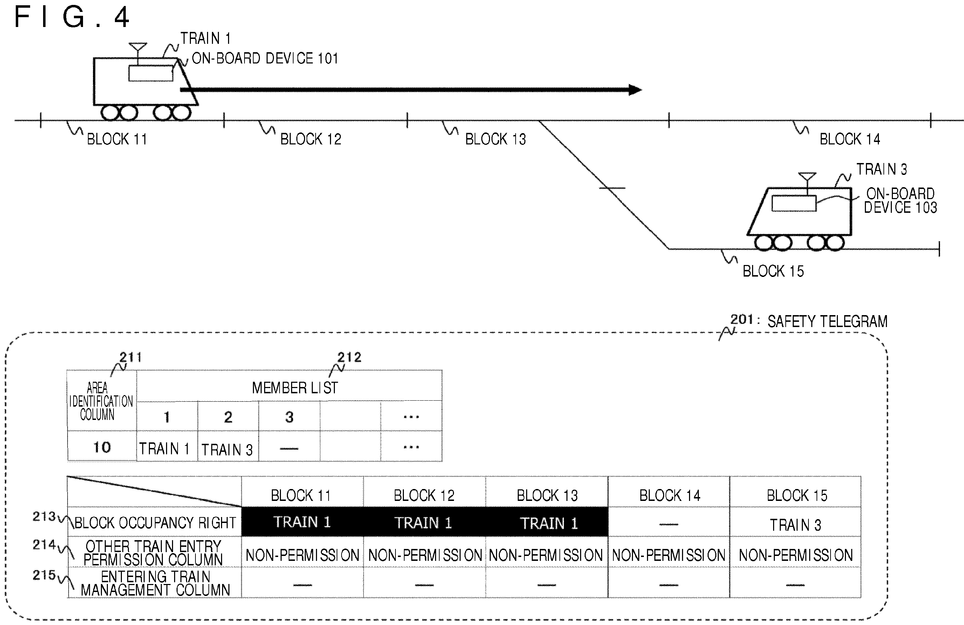

Next, a mechanism of coupling two trains in the area 10 controlled by the signaling safety system will be described as the embodiment with reference to FIGS. 4 to 8 for respective steps while a case in which the train 2 approaches the train 1 stopped and waiting for coupling is coupled to the train 1 is specifically taken by way of example.

FIG. 4 is a diagram illustrating a position of each train and a content of the safety telegram in Step 1 according to the embodiment. In Step 1, the train 1 secures the rights of occupancy of the block 11 to the block 13 in which the train 1 is planned to be coupled to the train 2, and enters the blocks 11 to 13 in a normal control mode. At this time, the on-board device of the train 1 secures the rights of occupancy of the blocks 11, 12, and 13 when the safety telegram 201 is circulated, and permits the train 1 to run up to a terminal end of the block 13. At this time, "non-permission" is filled in the other train entry permission column 214 of each of the blocks 11, 12, and 13; thus, the train 3 in the block 15 is unable to enter the block 13. Here, in the member list column 212, "train 1" is filled in "1" on the member list and "train 3" is filled in "2" on the member list in the member list column 212 with respect to the trains within the area 10.

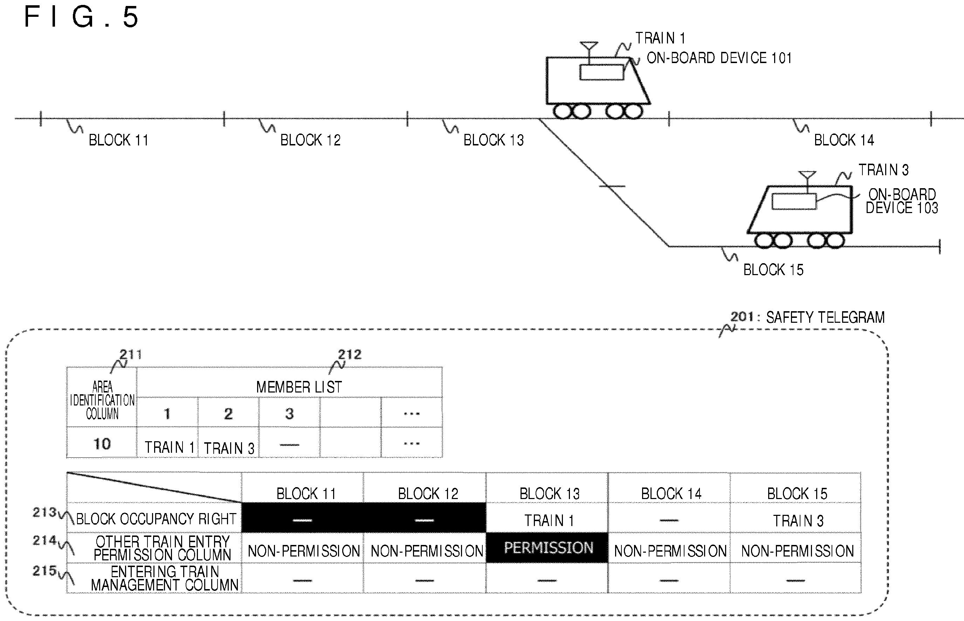

FIG. 5 is a diagram illustrating a position of each train and a content of the safety telegram in Step 2 according to the embodiment. In Step 2, the train 1 is stopped in the block 13 and waits for coupling to the train 2. At this time, the on-board device 101 of the train 1 transitions into a coupling waiting mode, releases the rights of occupancy of the blocks 11 and 12 when the safety telegram 201 is circulated, and fills in information about permission of the other train to enter the block 13. In other words, "permission" is filled in the other train entry permission column 214 of the block 13. The permission is assumed herein to indicate control to permit the other train to enter the block 13 only when it is detected that the train 1 is stopped in the block 13. In addition, in the coupling waiting mode, that is, while the information about permission of the other train to enter the block is being filled in, control is exercised in such a manner as to activate a service brake of the train 1 and not to ease off the service brake thereof.

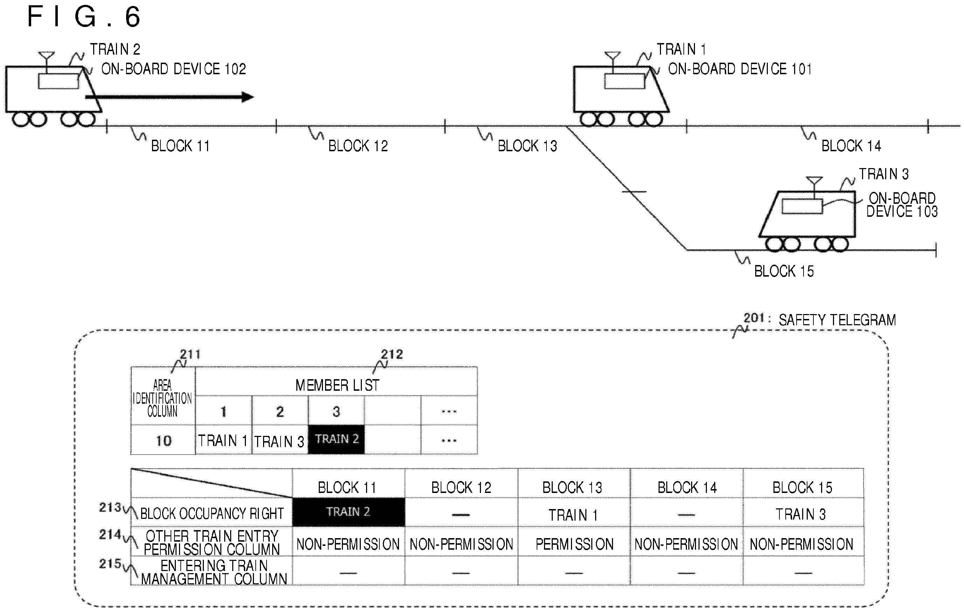

FIG. 6 is a diagram illustrating a position of each train and a content of the safety telegram in Step 3 according to the embodiment. In Step 3, the train 2 secures the right of occupancy of the block 11, enters the block 11 in a normal control mode, and is stopped. At this time, the on-board device 102 of the train 2 secures the right of occupancy of the block 11 when the safety telegram 201 is circulated, and permits the train 2 to run up to a terminal end of the block 11. Here, in the member list column 212, "train 2" is added to "3" on the member list when the train 2 within the area 10 enters the block 11.

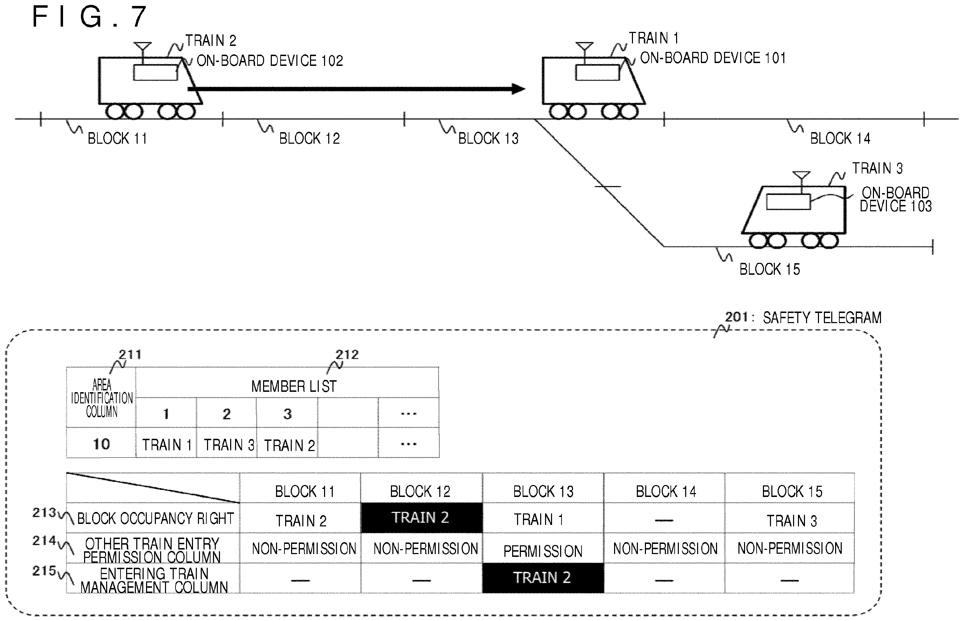

FIG. 7 is a diagram illustrating a position of each train and a content of the safety telegram in Step 4 according to the embodiment. In Step 4, the train 2 runs up to the terminal end of the block 11 and is stopped, and the on-board device 102 of the train 2 transitions into a coupling mode, secures the right of occupancy of the block 12 and the right of permission to enter the block 13 when the safety telegram 201 is circulated, and permits the train 2 to run to the block 13. In other words, "train 2" is filled in the entering train management column 215 of the block 13. It is noted that in the coupling mode a speed of the train is limited to a speed equal to or lower than a specified speed allowed during coupling. In other words, the train (train 2 herein) given "permission" in the other train entry permission column 214 is permitted to enter the block (block 13 herein) in a case in which the speed is equal to or lower than the specified speed.

In Step 5, the train 2 enters the blocks 12 and 13 and is coupled to the train 1.

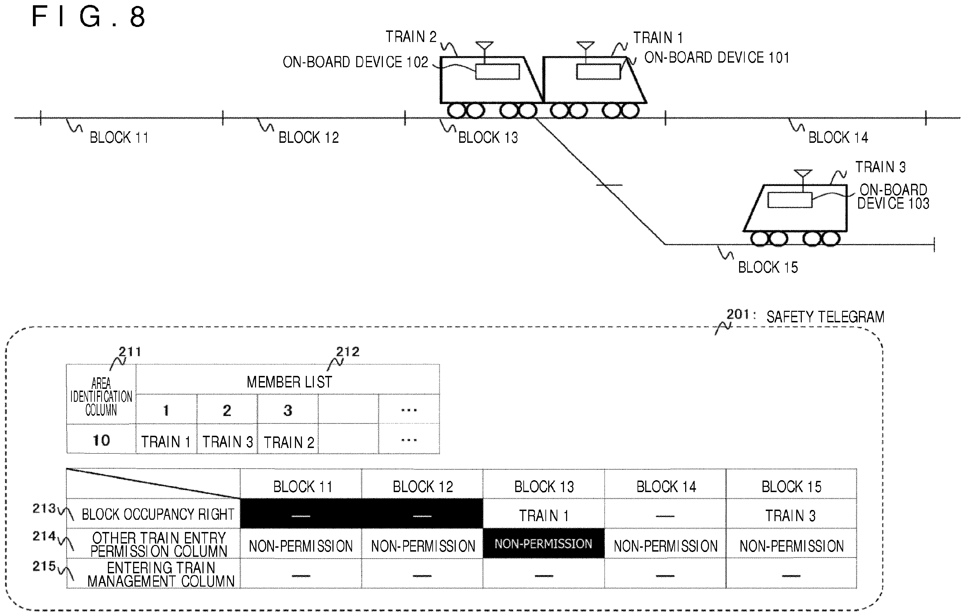

FIG. 8 is a diagram illustrating a position of each train and a content of the safety telegram in Step 6 according to the embodiment. In Step 6, after completion of coupling the train 1 to the train 2, the on-board device 102 of the train 2 releases the rights of occupancy of the blocks 11 and 12 and the right of permission to enter the block 13 when the safety telegram 201 is circulated, and transitions into a coupled mode. In addition, after updating a train length, the on-board device 101 of the train 1 erases the information about permission of entry of the other train filled in the block 13 when the safety telegram is circulated, and returns into the normal control mode. In other words, "permission" is erased and "non-permission" is filled in the other train entry permission column 214 of the block 13, and "train 2" in the entering train management column 215 of the block 13 is erased.

In this way, the signaling safety system according to the present embodiment can couple the train 1 to the train 2 after the on-board device of the train 1 guarantees that the train 1 is stopped.

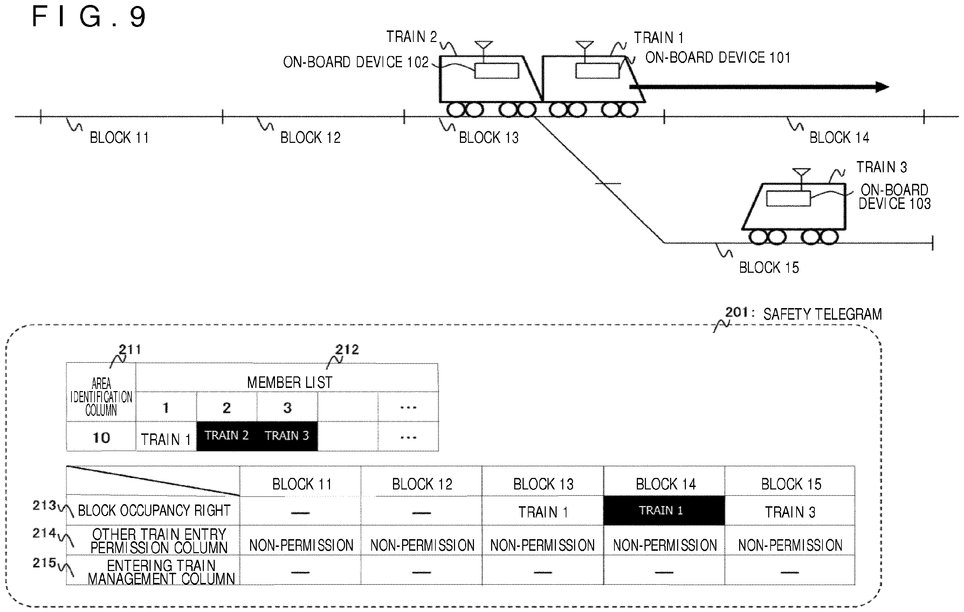

Next, a mechanism such that the on-board device of the coupled train detects that coupling of the trains is incomplete and the coupled train has been decoupled to guarantee the safety in this case. This mechanism will be described while a case in which the trains 1 and 2 coupled in the embodiment move into the block 14 is specifically taken by way of example. Step 7 subsequent to Step 6 in the embodiment and the following steps will be described with reference to FIGS. 9 to 11.

FIG. 9 is a diagram illustrating a position of each train and a content of the safety telegram in Step 7. In Step 7, the train 1 completed with coupling secures first the right of occupancy of the block 13 on the track for the train 1 to run from the block 13 to the block 14. Next, to run up to a terminal end of the block 14, the on-board device 101 of the train 1 secures the right of occupancy of the block 14 when the safety telegram 201 is circulated. In other words, "train 1" is filled in the block occupancy right column 213 of the block 14. At a time of having been able to secured the right of occupancy of the block 14, the on-board device 101 permits the train 1 to run up to a terminal end of the block 14. In addition, the on-vehicle device 101 changes the member list column 212 so that the train 2 that is the coupled train is listed next to the train 1 in an order of circulation of the safety telegram 201. In other words, "train 1" is filled in "1" on the member list, "train 2" is filled in "1" on the member list, and "train 3" is filled in "3" on the member list.

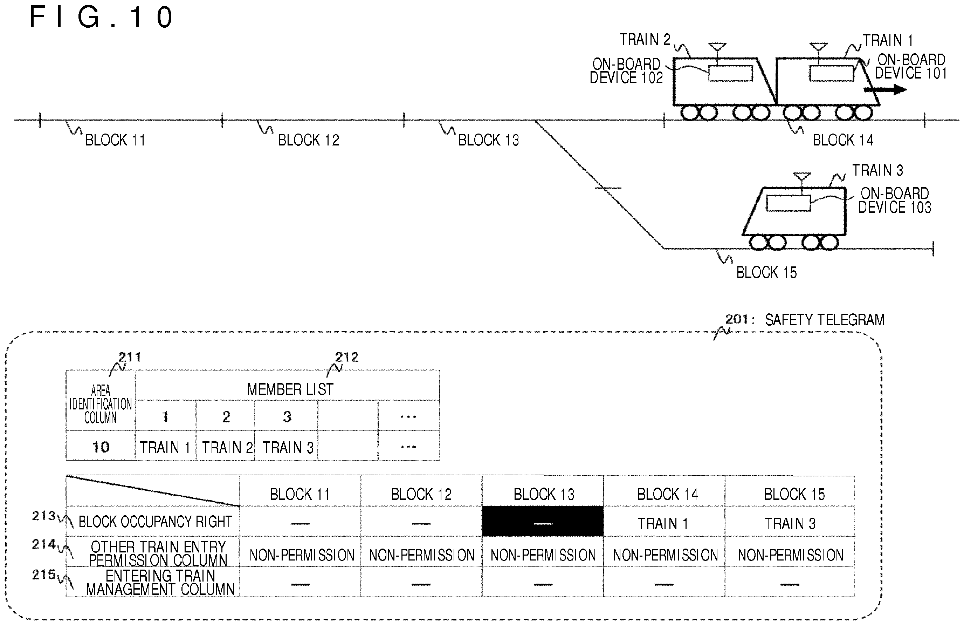

FIG. 10 is a diagram illustrating a position of each train and a content of the safety telegram in Step 8. In Step 8, in a case in which the train 2 coupled to the train 1 exits the block 13, the on-board device 101 of the train 1 releases the right of occupancy of the block 13 when the safety telegram is circulated. In other words, "train 1" in the block occupancy right column 213 of the block 13 is erased.

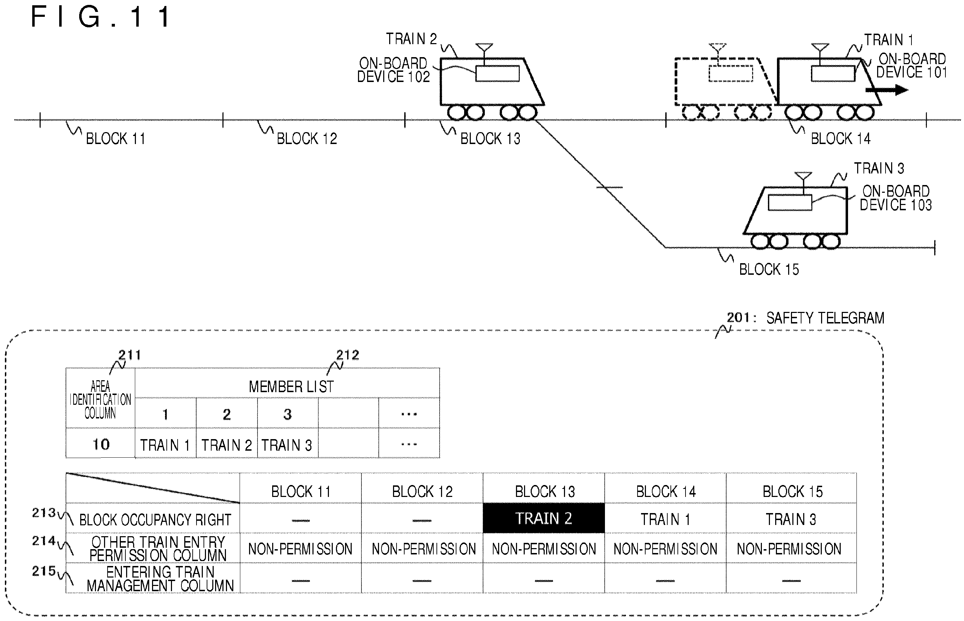

FIG. 11 is a diagram illustrating a position of each train and a content of the safety telegram in Step 9. In Step 9, a case in which the coupling of the train 1 to the train 2 is incomplete in Step 5 will be described since the train 2 remains in the block 13 in this case.

The on-board device 102 of the train 2 checks the block occupancy right column 213 of the block 13 in which the train 2 is present when the safety telegram 201 is circulated from the train 1. At this time, in the case in which the train 1 exits the block 13 as depicted in FIG. 10, "train 1" in the block occupancy right column 213 of the block 13 is erased and the block occupancy right column 213 of the block 13 changes to a blank column. In a case in which the block occupancy right column 213 of the block 13 in which the train 2 is present changes to the blank column, the on-board device 102 of the train 2 recognizes that the train 2 has been decoupled from the coupled train, activates the service brake, and secures the right of occupancy of the block. In other words, "train 2" is filled in the block occupancy right column 213 of the block 13. It is thereby possible to prevent the other train from entering the block 13. Furthermore, in a case in which the on-board device 102 has interfaces with command personnel, drivers, and operators, the on-board device 102 may alert the command personnel, the drivers, and the operators of train decoupling.

As illustrated in the embodiment described above, the signaling safety system of the present invention is capable of causing not the driver or the operator but the signaling safety system to guarantee that one of the trains is stopped to secure safety at a time of coupling the trains. In addition, even in a case of decoupling the trains due to incomplete coupling work, the system can safely detect this decoupling. Owing to this, the on-board device of one of the trains guarantees that the one train is stopped at a time of coupling the trains and detects decoupling at a time of decoupling the trains due to the incomplete coupling of the trains, and the system can transition into a safe mode even without confirmation by the driver or the operator.

Needless to say, two or more trains may be present in the area while the case in which the two trains are present in the area has been described in the embodiment of the present invention. In addition, the area 10 may be divided into four or more blocks while the case of dividing the area 10 into the four blocks has been described. While it has been assumed that one safety telegram manages all the rights of block occupancy, the other train entry permission information, the rights of other train entry permission, and the like, a plurality of safety telegrams may manage the rights and the like as long as managed contents do not overlap among the plurality of safety telegrams.

The occupied range or a preserved range of each train is indicated in blocks in the embodiment of the present invention. Needless to say, the range may be indicated by a relative position from a certain reference point or indicated by an absolute position such as a latitude and a longitude. In that case, the occupied range of each train indicated by the relative position from the certain reference point or the absolute position such as the latitude and the longitude is filled in the safety telegram.

The present invention is not limited to the embodiment described above but encompasses various modifications. For example, the abovementioned embodiment has been described in detail for describing the present invention so that the present invention is easy to understand. The present invention is not always limited to those having all the configurations described so far, but is limited by the scope of the claims It is noted that the present invention is widely applicable to case of coupling trains.

### Description of Reference Characters

1, 2, 3: Train
11, 12, 13, 14, 15: Block
10, 20, 30: Area
101, 102, 103: On-board device
201: Safety telegram

## Claims

1. An on-board device (101) of a train (1) configured to receive, update and transmit a safety telegram (201) that includes occupied range information about the train (1) running on a rail track (51) from and to an on-board device (102) of another train (2), the occupied range information including occupancy rights to blocks of the rail track (51), the safety telegram (201) further including entry permissions of other trains to the blocks, the safety telegram (201) being circulated among the on-board devices (101,102,103), and the on-board devices (101,102,103) controlling the trains on the basis of information included in the safety telegram (201), **characterised in that**
in a case of coupling the one train (1) to the other train (2), other train (2) entry permission information for permitting the other train (2) to enter an occupied range of the one train (1) is filled in the safety telegram,
the other train (2) entry permission information is filled in the safety telegram (201) on condition that the one train (1) is stopped, and control is exercised over the one train (1) in such a manner that the one train (1) continues to activate a brake, and
on completion of coupling one train (1) to the other train (2), the other train (2) entry permission information is erased.

2. The on-board device (101) according to claim 1, wherein
the safety telegram (201) includes entering train management information, and
an identification number of the other train (2) is filled in the safety telegram (201) as the entering train management information when the other train (2) enters the occupied range of the one train (1), the occupied range being permitted to be entered by the other train (2) for coupling to the one train (1).

3. The on-board device (101) according to claim 2, wherein
the identification number of the other train (2) can be filled in the safety telegram (201) as the entering train management information in such a manner that number of other trains (2,3) does not exceed number of trains specified in advance, and a train an identification number of which is filled in the safety telegram (201) is permitted to enter the occupied range of the one train (1).

4. The on-board device (101) according to claim 2, wherein
a speed of the other train (2) is limited to a speed equal to or lower than a speed specified in advance when the other train (2) enters the occupied range of the one train, the occupied range being permitted to be entered by the other train (2).

5. The on-board device (101) according to claim 1, wherein
in a case of coupling a plurality of trains (1,2,3),
the on-board device (101) of a first train (1) that is a front train in a traveling direction changes an order of circulation of the safety telegram (201) in such a manner that a second train (2) that is a rear train in the traveling direction is listed next to the first train (1), and
the on-board device (102) of the second train (2) confirms on the safety telegram (201) a state of a right of occupancy of a range in which the second train (2) is present, and secures a right of occupancy of the range in which the second train (2) is present in a case in which the right of occupancy of the range in which the second train (2) is present is released.

6. A train (1) mounting the on-board device (101) according to any one of claims 1 to 5.

7. A signaling safety system wherein a safety telegram (201) including occupancy information about a plurality of trains (1,2,3) each mounting the on-board device (101,102,103) according to any one of claims 1 to 5 is circulated among the on-board device (101,102,103) of each of the plurality of trains (1,2,3).

## Patentansprüche

1. Bordvorrichtung (101) eines Zuges (1), die ausgelegt ist, um ein Sicherheitstelegramm (201) zu empfangen, zu aktualisieren und zu senden, das Belegungsbereichsinformationen über den Zug (1) umfasst, der auf einem Schienengleis (51) von und zu einer Bordvorrichtung (102) eines anderen Zuges (2) fährt, wobei die Belegungsbereichsinformationen Belegungsrechte an Blöcken des Schienengleises (51) umfassen, wobei das Sicherheitstelegramm (201) außerdem Einfahrgenehmigungen von anderen Zügen in die Blöcke umfasst, wobei das Sicherheitstelegramm (201) zwischen den Bordvorrichtungen (101, 102, 103) zirkuliert und die Bordvorrichtungen (101, 102, 103) die Züge auf Grundlage von Informationen, die in dem Sicherheitstelegramm (201) umfasst sind, steuern,
**dadurch gekennzeichnet, dass**
in einem Fall des Ankuppelns des einen Zugs (1) an den anderen Zug (2) Einfahrgenehmigungsinformationen für den anderen Zug (2) zur Genehmigung des Einfahrens des anderen Zuges (2) in einen Belegungsbereich des einen Zuges (1) in dem Sicherheitstelegramm ausgefüllt sind,
die Einfahrgenehmigungsinformationen für den anderen Zug (2) in dem Sicherheitstelegramm (201) zu der Bedingung ausgefüllt sind, dass der eine Zug (1) angehalten wird, und eine Steuerung des einen Zuges (1) derart ausgeübt wird, dass der eine Zug (1) es fortsetzt, eine Bremse zu aktivieren, und
nach Vervollständigung des Ankuppelns des einen Zuges (1) an den anderen Zug (2) die Einfahrgenehmigungsinformationen für den anderen Zug (2) gelöscht werden.

2. Bordvorrichtung (101) nach Anspruch 1, wobei
das Sicherheitstelegramm (201) Verwaltungsinformationen zum einfahrenden Zug umfasst, und
eine Identifikationszahl des anderen Zuges (2) im Sicherheitstelegramm (201) als die Verwaltungsinformationen zum einfahrenden Zug ausgefüllt wird, wenn der andere Zug (2) in den Belegungsbereich des einen Zuges (1) einfährt, wobei genehmigt wird, dass der andere Zug (2) zum Ankuppeln an den einen Zug (1) in den Belegungsbereich einfährt.

3. Bordvorrichtung (101) nach Anspruch 2, wobei die Identifikationszahl des anderen Zuges (2) derart als die Verwaltungsinformationen des einfahrenden Zuges in dem Sicherheitstelegramm (201) ausgefüllt werden können, dass die Anzahl der anderen Züge (2, 3) nicht die im Vorhinein festgelegte Anzahl an Zügen überschreitet, und einem Zug, dessen Identifikationszahl in dem Sicherheitstelegramm (201) ausgefüllt ist, genehmigt wird, in den Belegungsbereich des einen Zuges (1) einzufahren.

4. Bordvorrichtung (101) nach Anspruch 2, wobei eine Geschwindigkeit des anderen Zuges (2) auf eine Geschwindigkeit beschränkt ist, die gleich oder kleiner als eine im Vorhinein festgelegte Geschwindigkeit ist, wenn der andere Zug (2) in den Belegungsbereich des einen Zuges einfährt, wobei genehmigt wird, dass der andere Zug (2) in den Belegungsbereich einfährt.

5. Bordvorrichtung (101) nach Anspruch 1, wobei im Fall eines Ankuppelns einer Vielzahl von Zügen (1, 2, 3)
die Bordvorrichtung (101) eines ersten Zuges (1), der ein in Fahrtrichtung vorderer Zug ist, eine Zirkulationsreihenfolge des Sicherheitstelegramms (201) derart ändert, dass ein zweiter Zug (2), der ein in Fahrtrichtung hinterer Zug ist, als nächster nach dem ersten Zug (1) gelistet ist, und
die Bordvorrichtung (102) des zweiten Zuges (2) auf dem Sicherheitstelegramm (201) einen Status eines Belegungsrechts eines Bereichs bestätigt, in dem sich der zweite Zug (2) befindet, und im Fall, in dem das Belegungsrecht des Bereichs, in dem sich der zweite Zug (2) befindet, freigegeben wird, ein Belegungsrecht des Bereichs, in dem sich der zweite Zug (2) befindet, gewährleistet.

6. Zug (1), in dem eine Bordvorrichtung (101) nach einem der Ansprüche 1 bis 5 angebracht ist.

7. Signalsicherheitssystem, in dem ein Sicherheitstelegramm (201), das Belegungsinformationen zu einer Vielzahl von Zügen (1, 2, 3), in denen jeweils eine Bordvorrichtung (101, 102, 103) nach einem der Ansprüche 1 bis 5 angebracht ist, umfasst, zwischen den Bordvorrichtungen (101, 102, 103) von jeder der Vielzahl von Zügen (1, 2, 3) zirkuliert.

## Revendications

1. Dispositif embarqué (101) d'un train (1) configuré pour recevoir, mettre à jour et transmettre un télégramme de sécurité (201) qui comprend des informations d'intervalle occupé concernant le train (1) circulant sur une voie ferrée (51) depuis et vers un dispositif embarqué (102) d'un autre train (2), les informations d'intervalle occupé comprenant des droits d'occupation de segments de la voie ferrée (51), le télégramme de sécurité (201) comprenant en outre des autorisations d'entrée d'autres trains dans les segments, le télégramme de sécurité (201) étant diffusé parmi les dispositifs embarqués (101, 102, 103), et les dispositifs embarqués (101, 102, 103) commandant les trains sur la base d'informations incluses dans le télégramme de sécurité (201), **caractérisé en ce que**
dans le cas d'un couplage du premier train (1) à l'autre train (2), des informations d'autorisation d'entrée de l'autre train (2) pour autoriser l'autre train (2) à entrer dans un intervalle occupé du premier train (1) sont renseignées dans le télégramme de sécurité,
les informations d'autorisation d'entrée de l'autre train (2) sont renseignées dans le télégramme de sécurité (201) à condition que le premier train (1) soit arrêté, et une commande est exercée sur le premier train (1) de telle sorte que le premier train (1) continue à actionner un frein, et
à la fin du couplage du premier train (1) à l'autre train (2), les informations d'autorisation d'entrée de l'autre train (2) sont effacées.

2. Dispositif embarqué (101) selon la revendication 1, dans lequel
le télégramme de sécurité (201) comprend des informations de gestion de train entrant, et
un numéro d'identification de l'autre train (2) est renseigné dans le télégramme de sécurité (201) en tant qu'informations de gestion de train entrant lorsque l'autre train (2) entre dans l'intervalle occupé du premier train (1), l'autre train (2) étant autorisé à entrer dans l'intervalle occupé pour couplage au premier train (1).

3. Dispositif embarqué (101) selon la revendication 2, dans lequel
le numéro d'identification de l'autre train (2) peut être renseigné dans le télégramme de sécurité (201) en tant qu'informations de gestion de train entrant de telle manière qu'un nombre d'autres trains (2, 3) ne dépasse pas un nombre de trains spécifié à l'avance, et un train dont un numéro d'identification est renseigné dans le télégramme de sécurité (201) est autorisé à entrer dans l'intervalle occupé du premier train (1).

4. Dispositif embarqué (101) selon la revendication 2, dans lequel
une vitesse de l'autre train (2) est limitée à une vitesse égale ou inférieure à une vitesse spécifiée à l'avance lorsque l'autre train (2) entre dans l'intervalle occupé du premier train, l'autre train (2) étant autorisé à entrer dans l'intervalle occupé.

5. Dispositif embarqué (101) selon la revendication 1, dans lequel
dans un cas d'un couplage d'une pluralité de trains (1, 2, 3),
le dispositif embarqué (101) d'un premier train (1) qui est un train de tête dans une direction de marche modifie un ordre de circulation du télégramme de sécurité (201) de telle sorte qu'un second train (2) qui est un train arrière dans la direction de marche est répertorié à côté du premier train (1), et
le dispositif embarqué (102) du second train (2) confirme sur le télégramme de sécurité (201) un état d'un droit d'occupation d'un intervalle dans lequel le second train (2) est présent, et sécurise un droit d'occupation de l'intervalle dans lequel le second train (2) est présent dans un cas où le droit d'occupation de l'intervalle dans lequel le second train (2) est présent est libéré.

6. Train (1) portant le dispositif embarqué (101) selon l'une quelconque des revendications 1 à 5.

7. Système de sécurité de signalisation dans lequel un télégramme de sécurité (201) comprenant des informations d'occupation concernant une pluralité de trains (1, 2, 3) portant chacun le dispositif embarqué (101, 102, 103) selon l'une quelconque des revendications 1 à 5 est diffusé parmi le dispositif embarqué (101, 102, 103) de chacun de la pluralité de trains (1, 2, 3).
